# EUROPÄISCHE PATENTSCHRIFT

(11) **EP 0 541 931 B1**
(45) Veröffentlichungstag und Bekanntmachung des Hinweises auf die Patenterteilung: **01.05.1996**
(21) Anmeldenummer: 92115892.9
(22) Anmeldetag: 17.09.1992
(51) Int. Cl.: B29C 65/20

(54) **Einrichtung zum stirnseitigen Verschweissen von Kunststoffteilen**
Apparatus for butt-welding synthetic parts
Appareil pour le soudage bout à bout de pièces en matière synthétique

(30) Priorität: 11.11.1991 CH 3279/91
(43) Veröffentlichungstag der Anmeldung: 19.05.1993
(73) Patentinhaber: Georg Fischer Rohrleitungssysteme AG, CH-8201 Schaffhausen (CH)
(72) Erfinder: Tanner, Ernst, CH-8212 Neuhausen (CH); Wermelinger, Jörg, CH-8200 Schaffhausen (CH); Gassner, Theo, FL-9497 Triesenberg (LI)

(56) Entgegenhaltungen:
- EP-A- 0 453 903
- CH-A- 375 516
- DE-A- 1 950 977
- DE-A- 2 012 716
- GB-A- 2 251 822
- US-A- 3 200 028

## Beschreibung

Die Erfindung betrifft eine Einrichtung zum stirnseitigen Verschweissen von Kunststoffteilen, wie sie im Oberbegriff von Anspruch 1 beschrieben ist.

Durch die EP-A2-0167870 ist eine Einrichtung der eingangs genannten Art bekanntgeworden, welche als in der Hand zu haltendes Gerät ausgebildet und nur für kleine Rohrdurchmesser geeignet ist. Eine fehlerfreie Bedienung zur Erzielung einwandfreier Schweissungen ist mit dieser Einrichtung kaum zu erreichen, da die beiden zu verschweissenden Teile mittels der verschiebbaren Spannvorrichtung auch zusammengefahren werden können, während die Heizvorrichtung noch dazwischen eingeschoben ist. Ausserdem entstehen, abhängig vom Geschick des Arbeiters, unterschiedliche Zeiten beim Herausfahren der Heizvorrichtung, sodass eine für eine gute Schweissung erforderliche Einhaltung der Schweisstemperatur nicht immer gewährleistet ist.

Aus der DE-A-1950977 ist weiter eine Einrichtung zum stirnseitigen Verschweissen von Kunststoffteilen in Form einer Zange bekannt. Die Zange weist ein durch einen Stift gehaltenes und unter der Wirkung einer Feder stehendes Heizelement auf. Beim Oeffnen der Zange wird das Heizelement freigegeben und mittels Federkraft zurückgezogen. Diese Einrichtung entspricht dem Stand der Technik, wie im Oberbegriff des Patentanspruchs 1 definiert.

Aufgabe der vorliegenden Erfindung ist die Schaffung einer Einrichtung der eingangs genannten Art, mittels welcher trotz Handbedienung einwandfreie Schweissverbindungen herstellbar sind.

Erfindungsgemäss wird diese Aufgabe durch die Merkmale von Anspruch 1 gelöst.

Besonders vorteilhafte Ausgestaltungen der Erfindung sind in den abhängigen Ansprüchen gekennzeichnet.

Durch das automatische Lösen der Arretierung der Heizvorrichtung beim Zurückfahren einer Spannvorrichtung nach Ablauf der Heizzeit, wird auch automatisch die Heizvorrichtung aus dem Bereich zwischen den Spannvorrichtungen wegbewegt, sodass sofort danach das Zusammendrücken der erwärmten Enden der rohrförmigen Teile zur Verschweissung erfolgen kann. Dadurch werden Fehlbedienungen vermieden.

Vorteilhafterweise erfolgt die automatische Zurückbewegung der Heizvorrichtung nach Lösen der Arretierung mittels Federkraft.

Die Erfindung ist anhand eines Ausführungsbeispieles in den beiliegenden Zeichnungen dargestellt und nachfolgend beschrieben. Es zeigen:
- Fig. 1: eine teilweise geschnittene Seitenansicht der Einrichtung zum Verschweissen von Kunststoffteilen,
- Fig. 2: einen Schnitt entlang der Linie II - II von Fig. 1 und
- Fig. 3: eine Teilansicht in Richtung A von Fig. 2.

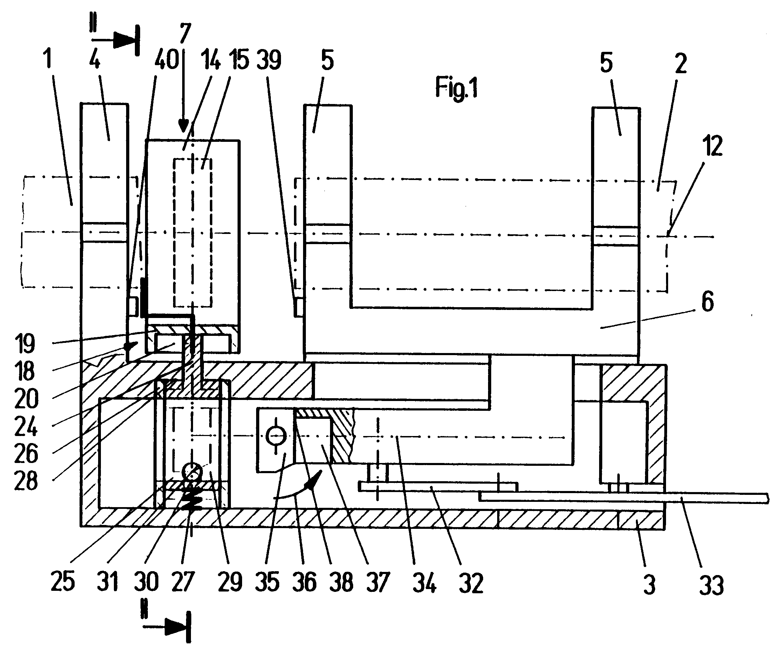

Die Einrichtung zum stirnseitigen Verschweissen von rohrförmigen Kunststoffteilen 1, 2 wie z.B. von Rohren oder Fittings weist, wie aus Fig. 1 ersichtlich, ein Grundgestell 3 auf, auf welchem eine fest angeordnete Spannvorrichtung 4 und eine auf einem Schlitten 6 axial verschiebbare Spannvorrichtung 5 angeordnet ist.

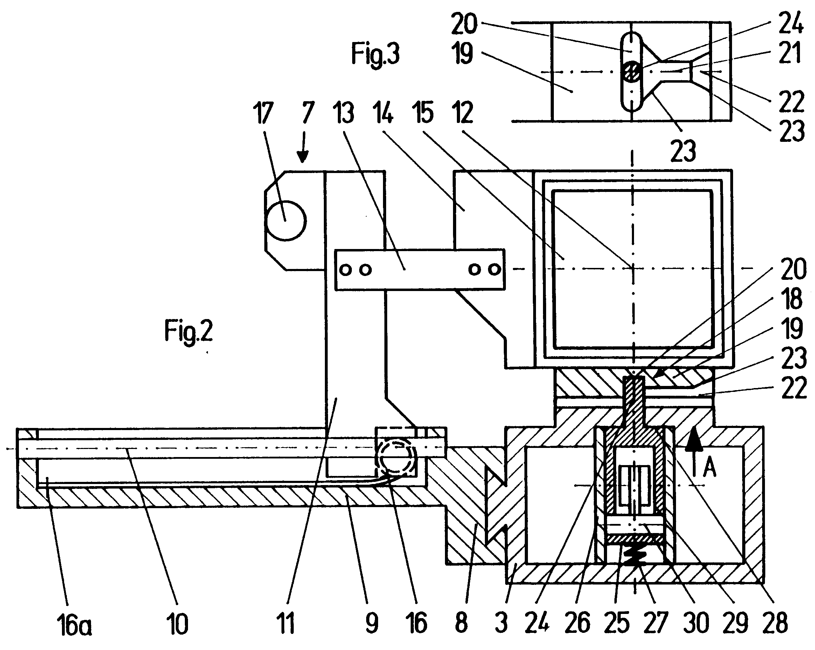

Eine Heizvorrichtung 7 ist zwischen den beiden Spannvorrichtungen 4, 5 angeordnet, wobei diese, wie aus Fig. 2 ersichtlich, seitlich am Grundgestell 3 leicht abnehmbar mittels einer Klemmvorrichtung 8 befestigt ist.

Die Heizvorrichtung 7 weist einen mit einer Geradführung 10 versehenen Führungskörper 9 auf, wobei ein Schlitten 11 quer zur Rohrlängsachse 12 auf dem Führungskörper 9 verschiebbar angeordnet ist.

Am Schlitten 11 ist mittels Blattfedern 13 ein Rahmenteil 14 befestigt, an welchem eine elektrisch heizbare Heizplatte 15 angeordnet ist.

Am Schlitten 11 ist ein auf- bzw. abrollbares Spiral-Federband 16 angeordnet, von dem ein Ende 16a am Führungskörper 9 befestigt ist.

Mittels eines am Schlitten 11 angeordneten Handgriffes 17 ist die Heizplatte 15 in die in der Fig. 2 gezeigten Aufheizstellung verschiebbar, wo sie mittels einer Arretiervorrichtung 18 gehalten wird, welche eine an der Unterseite des Rahmenteiles 14 angeordnete Platte 19 aufweist.

Wie in Fig. 3 dargestellt, ist in der Platte 19 eine quer zur Verschieberichtung der Heizvorrichtung 7 verlaufende Nute 20 angeordnet, welche mit einer weniger tiefen und in Verschieberichtung verlaufenden Nute 21 verbunden ist.

Eine Einfahröffnung 22 der Nute 21 ist mit Anschrägungen 23 versehen. Beim Verschieben der Heizvorrichtung 7 in die Arbeitsstellung wird die Nute 21 über einen im Grundgestell 3 angeordneten, vertikal verschiebbaren Bolzen 24 der Arretiervorrichtung 18 geschoben, bis dieser in der tieferen Nute 20 einrastet.

Der Bolzen 24 ist fest mit einem Druckstück 25 verbunden, welches in einer im Grundgestell 3 angeordneten Büchse 26 verschiebbar geführt ist. Mittels Druckfedern 27 wird das Druckstück 25 gegen eine Anschlagfläche 28 nach oben gedrückt.

Das Druckstück 25 ist mit einer Ausnehmung 29 versehen, in welcher ein Querbolzen 30 angeordnet ist, der eine Anschlagfläche 31 bildet.

Wie aus Fig. 1 ersichtlich, ist der Schlitten 6 über ein Kniehebelsystem 32 mit einem Handhebel 33 wirkverbunden. Ein mit dem Schlitten 6 verbundener Stössel 34 wird bei Betätigung des Handhebels 33 ebenfalls in Richtung der Rohrlängsachse 12 verschoben. An einem Ende des Stössels 34 ist ein Nocken 35 schwenkbar angeordnet, wobei der Nocken 35 in Pfeilrichtung 36 in eine Ausnehmung 37 des Stössels verschwenkbar und in Gegenrichtung des Pfeiles 36 durch eine Anlagefläche 38 gesperrt ist.

Zum Aufheizen der Enden der rohrförmigen Teile 1 und 2 wird die Heizvorrichtung 7 von Hand gegen die Zugkraft des Federbandes 16 zwischen die beiden Spannvorrichtungen 4, 5 verschoben, wo sie durch Einrasten des Bolzens 24 in der Nute 20 arretiert wird.

Die Spannvorrichtung 5 wird dann durch Betätigung des Handhebels 33 verschoben, bis zuerst die Anschlagnocken 39 an der Heizvorrichtung 7 anliegen, wobei dann diese ebenfalls geringfügig verschoben wird, bis die andere Seite der Heizvorrichtung 7 an Anschlagnocken 40 der Spannvorrichtung 4 anliegt. In dieser Stellung weisen die Enden der rohrförmigen Teile 1, 2 zu dem die Wärme abstrahlenden Heizflächen der Heizplatte 15 die für ein berührungsloses rasches Aufheizen erforderlich geringe festgelegte Distanz auf.

Die zum Verschieben erforderliche Bewegungsfreiheit der Heizplatte 15 in Richtung der Rohrlängsachse 12 ist durch den entsprechenden Verlauf der Nute 20 und durch die mittels Blattfedern 13 bewegliche Halterung der Heizplatte 15 gewährleistet.

Durch die Verschiebebewegung des Schlittens 6 wird auch der Nocken 35 mit dem Stössel 34 durch die Ausnehmung 29 des Druckstückes 25 geschoben, wobei beim überfahren des Querbolzens 30 der Nocken 35 in Pfeilrichtung 36 verschwenkt wird, sodass keine Lösung der Arretierung zwischen Bolzen 24 und Nute 20 erfolgt. Nach Ablauf der Aufheizzeit, welche z.B. optisch angezeigt werden kann, wird der Schlitten 6 mit dem Handhebel 33 zurückbewegt, wobei der Nocken 35 auf die Anschlagfläche 31 des Querbolzens 30 trifft, sodass das Druckstück 25 mit dem Bolzen 24 gegen den Druck der Federn 27 nach unten bewegt und die Arretierung 18 der Heizvorrichtung 7 gelöst wird. Durch die Zugkraft des spiralförmigen Federbandes 16 wird der Schlitten 11 in seine Ausgangsstellung gebracht, wobei durch die Führung des Bolzens 24 in der Nute 21 ein seitliches Ausweichen des Rahmenteils 14 mit der Heizplatte 15 nicht möglich ist.

Eine Berührung zwischen der Heizplatte 15 und den Rohrenden ist somit nicht möglich.

Durch das rasche und automatische Zurückfahren der Heizvorrichtung 7 kann sofort nach der Auffahrbewegung des Schlittens 6 dieser wieder gegen die Spannvorrichtung 4 gefahren werden, sodass nach einer minimalen Zwischenzeit ohne nennenswerte Abkühlung der Rohrenden diese zum Verschweissen gegeneinander drückbar sind.

## Patentansprüche

1. Einrichtung zum stirnseitigen Verschweissen von Kunststoffteilen, welche in Spannvorrichtungen (4,5) gehalten sind, von denen mindestens eine auf einem verschiebbaren Schlitten (6) angeordnet ist, mit einer zwischen die Spannvorrichtungen (4,5) einbringbaren und mittels einer Arretiervorrichtung (18) in Arbeitsstellung zwischen den Spannvorrichtungen (4,5) gehaltenen Heizvorrichtung (7) zur berührungslosen Aufheizung der Enden der Kunststoffteile, wobei die Arretiervorrichtung (18) über einen Bolzen (24) mit dem verschiebbaren Schlitten (6) derart wirkverbunden ist, dass durch die Auffahrbewegung des Schlittens (6) die Arretierung lösbar ist und die Heizvorrichtung (7) automatisch in die Ausgangsstellung bringbar ist, dadurch gekennzeichnet, dass der Bolzen (24) zur Verschiebung der Heizvorrichtung (7) in beidseitige Anschlagstellung mit den Spannvorrichtungen (4,5) in eine in Verschieberichtung des Schlittens (6) verlaufende Nute (20) der Heizvorrichtung (7) einrastbar ist.

2. Einrichtung nach Anspruch 1, dadurch gekennzeichnet, dass die Heizvorrichtung (7) mittels Federkraft in die Ausgangsstellung bringbar ist.

3. Einrichtung nach Anspruch 1 oder 2, dadurch gekennzeichnet, dass der Bolzen (24) in die Nute (20) gegen Federdruck absenkbar ist.

4. Einrichtung nach Anspruch 3, dadurch gekennzeichnet, dass die in Verschieberichtung des Schlittens (6) verlaufende Nute (20) mit einer weniger tiefen und quer zur Verschieberichtung des Schlittens (6) verlaufende Nute (21) verbunden ist, welche eine mit Anschrägungen (23) versehene Einfahröffnung (22) für den Bolzen (24) aufweist.

5. Einrichtung nach Anspruch 3 oder 4, dadurch gekennzeichnet, dass der Bolzen (24) an einem im Grundgestell (3) geführten Druckstück (25) angeordnet ist, welches eine Anschlagfläche (31) für einen mit dem Schlitten (6) verschiebbaren Nocken (35) aufweist.

6. Einrichtung nach Anspruch 5, dadurch gekennzeichnet, dass der Nocken (35) am Schlitten (6) verschwenkbar angeordnet ist und nur in der Zurückfahrbewegung des Schlittens (6) mit der Anschlagfläche (31) des Druckstückes (25) zwecks Absenkung des Bolzens (24) wirkverbindbar ist.

7. Einrichtung nach einem der Ansprüche 2 bis 6, dadurch gekennzeichnet, dass die auf die Heizvorrichtung (7) wirkende Federkraft durch ein ab- bzw. aufrollbares Spiral-Federband (16) erzeugbar ist.

8. Einrichtung nach einem der Ansprüche 1 bis 7, dadurch gekennzeichnet, dass die Heizvorrichtung (7) eine Heizplatte (15) und einen in einer Geradführung (10) verschiebbaren Schlitten (11) aufweist, wobei die Heizplatte (15) mittels Blattfedern (13) quer zur Verschieberichtung beweglich an dem Schlitten (11) befestigt ist.

## Claims

1. Device for the end-to-end welding of plastics parts which are held in clamping devices (4, 5), at least one of which is arranged on a movable carriage (6), having a heating device (7), which can be introduced between the clamping devices (4, 5) and is held by means of an arresting device (18) in the working position between the clamping devices (4, 5), for the contactless heating of the ends of the plastics parts, the arresting device (18) being operatively connected to the movable carriage by means of a pin (24) in such a way that the arresting device can be released by the approach movement of the carriage (6), and the heating device (7) can be brought automatically into the initial position, characterised in that, for moving the heating device (7) into the stop position on both sides with the clamping devices (4, 5), the pin (24) can engage into a groove (20) of the heating device (7) extending in the sliding direction of the carriage (6).

2. Device according to claim 1, characterised in that the heating device (7) can be brought by means of spring force into the initial position.

3. Device according to claim 1 or 2, characterised in that the pin (24) can be lowered into the groove (20) against spring pressure.

4. Device according to claim 3, characterised in that the groove (20) extending in the sliding direction of the carriage (6) is connected to a shallower groove (21) extending transversely to the sliding direction of the carriage, this groove (21) having a run-in opening (22) for the pin (24) provided with inclines (23).

5. Device according to claim 3 or 4, characterised in that the pin (24) is arranged on a pressure piece (25) guided in the base frame (3), this pressure piece having a stop face (31) for a knob (35) which can be moved with the carriage (6).

6. Device according to claim 5, characterised in that the knob (35) is pivotably arranged on the carriage (6) and can be operatively connected to the stop face (31) of the pressure piece (25) only during the return movement of the carriage (6) for the purpose of lowering the pin (24).

7. Device according to one of claims 2 to 6, characterised in that the spring force acting on the heating device (7) can be produced by a spiral spring strip (16) which can be rolled out and rolled up.

8. Device according to one of claims 1 to 7, characterised in that the heating device (7) has a heating plate (15) and a carriage (11) which can be moved in a linear guideway (10), the heating plate (15) being secured to the carriage (11) by means of leaf springs (13) and movable transversely to the sliding direction.

## Revendications

1. Dispositif pour souder frontalement des pièces en matière plastique, qui sont retenues dans des dispositifs de serrage (4,5), dont l'un au moins est disposé sur un chariot mobile (6), et comportant un dispositif de chauffage (7), qui peut être inséré entre les dispositifs de serrage (4,5) et peut être retenu au moyen d'un dispositif de blocage (18) dans une position de travail entre les dispositifs de serrage (4,5), pour chauffer sans contact les extrémités des pièces en matière plastique, le dispositif de blocage (18) étant relié selon une liaison active, au moyen d'une broche (24), au chariot mobile (6) de telle sorte que sous l'effet du mouvement d'avance du chariot (6), le blocage peut être supprimé et le dispositif de chauffage (7) peut être amené automatiquement dans la position de départ, caractérisé en ce que la broche (24) peut être encliquetée, pour amener par translation le dispositif de chauffage (7), dans une position en butée, de chaque côte, avec les dispositifs de serrage (4,5), dans une rainure (20) du dispositif de chauffage (7), qui s'étend dans la direction de translation du chariot (6).

2. Dispositif selon la revendication 1, caractérisé en ce que le dispositif de chauffage (7) peut être amené dans la position de départ à l'aide de la force d'un ressort.

3. Dispositif selon la revendication 1 ou 2, caractérisé en ce que la broche (24) peut être abaissée dans la rainure (20) à l'encontre de la force d'un ressort.

4. Dispositif selon la revendication 3, caractérisé en ce que la rainure (20), qui s'étend dans la direction de translation du chariot (6), est reliée à une rainure moins profonde (21), qui s'étend transversalement par rapport à la direction de translation du chariot (6) et qui possède une ouverture d'entrée (22) pour la broche (24), comportant des biseaux (23).

5. Dispositif selon la revendication 3 ou 4, caractérise en ce que la broche (24) est disposée sur un élément de pression (25), qui est guidé dans le châssis de base (3) et qui possède une surface de butée (31) pour un ergot (35) déplaçable avec le chariot (6).

6. Dispositif selon la revendication 5, caractérisé en ce que l'ergot (35) est monté de manière à pouvoir basculer sur le chariot (6) et peut être relié activement, uniquement dans le cas du déplacement rétrograde du chariot (6), à la surface de butée (31) de l'élément de pression (25), pour abaisser la broche (24).

7. Dispositif selon l'une des revendications 2 à 6, caractérisé en ce que la force du ressort, qui agit sur le dispositif de chauffage (7), peut être produite par un ressort spiral en forme de bande (16) pouvant être déroulé ou enroulé.

8. Dispositif selon l'une des revendications 1 à 7, caractérisé en ce que le dispositif de chauffage (7) possède une plaque chauffante (15) et un chariot (11) translatable dans un guide rectiligne (10), la plaque chauffante (15) étant fixée au moyen de ressorts à lames (13) de manière à être déplaçable sur le chariot (11) transversalement par rapport à la direction de translation.
